# EUROPÄISCHE PATENTANMELDUNG

(11) **EP 3 511 452 A1**
(43) Veröffentlichungstag der Anmeldung: **17.07.2019**
(21) Anmeldenummer: 19150135.2
(22) Anmeldetag: 03.01.2019
(51) Int. Cl.: D01H 13/00, B65H 54/22, B65H 63/00, B65H 63/04, D01H 13/32, G05B 23/02

(54) **VERFAHREN ZUM STEUERN VON ANZEIGEN EINER SPINN- ODER SPULMASCHINE**

(30) Priorität: 09.01.2018 DE 102018100362
(71) Anmelder: Maschinenfabrik Rieter AG, 8406 Winterthur (CH)
(72) Erfinder: BAHLMANN, Bernd, 86529 Schrobenhausen (DE); MALECK, Mario, 85137 Walting (DE); HUETTINGER, Franz, 85290 Geisenfeld (DE)
(74) Vertreter: Baudler, Ron

(57) **Zusammenfassung**

Die Erfindung betrifft ein Verfahren zum Steuern von Anzeigen (1) an einer Spinn- oder Spulmaschine (2) mit einer Vielzahl gleichartiger Arbeitsstellen (3), wobei jeweils einer Anzeige (1) mehrere Arbeitsstellen (3) zugeordnet sind. Durch die Teilung der Anzeigeflächen in Teilflächen (4), wobei der Flächenanteil dieser Teilflächen (4) variabel ist, wird es möglich, bei gleicher Informationsdichte, die Anzahl der Anzeigen (1) gegenüber einer Zuordnung von einer Anzeige (1) je Arbeitsstelle (3) zu reduzieren. Außerdem betrifft die Erfindung eine Spinn- oder Spulmaschine, die ausgebildet ist, das beschriebene Verfahren anzuwenden.

## Beschreibung

Die vorliegende Erfindung betrifft ein Verfahren zum Steuern von Anzeigen einer Spinn- oder Spulmaschine mit einer Vielzahl von gleichartigen Arbeitsstellen und mehreren Anzeigen, wobei jeweils eine Anzeige mehreren Arbeitsstellen zugeordnet ist. Weiterhin betrifft die Erfindung eine entsprechende Spinn- oder Spulmaschine.

Textilmaschinen, insbesondere Spinn- oder Spulmaschinen mit einer Vielzahl gleichartiger Arbeitsstellen, an denen jeweils ein Faden hergestellt und/oder von einer Hülse auf eine andere umgespult wird, sind bekannt. Ebenso ist es bekannt, derartige Arbeitsstellen mehr oder weniger unabhängig voneinander zu betreiben. Diese Unabhängigkeit führt ebenfalls zu einem unabhängigen Wartungs- und Steuerungsbedarf jeder einzelnen Arbeitsstelle. Dafür ist es notwendig, dem Bedienpersonal Informationen zu den jeweiligen Arbeitsstellen zur Verfügung zu stellen.

Hierzu beschreibt die DE 199 30 714 A1 eine Textilmaschine mit Arbeitsstellen, die jeweils eine individuelle Steuerung und mindestens eine individuelle Anzeigevorrichtung aufweisen, wobei die Anzeigevorrichtung beispielsweise ein Display zur Darstellung wartungs- und leistungsbezogener Informationen aufweist. Die Ausstattung jeder einzelnen Spinnstelle mit einem Display ist mit produktionstechnischem Aufwand und erhöhten Kosten verbunden. Im Gegensatz dazu beschreibt die DE 10 2013 011 921 A1 eine Ringspinnmaschine mit Anzeigemitteln zur Anzeige von Störungen der Spinnstellen, wobei sich zwei benachbarte Spinnstellen beispielsweise ein Anzeigemittel teilen. Das hier beschriebene Anzeigemittel zeigt jedoch ausschließlich an, dass an einer der beiden Spinnstellen ein Problem vorliegt, nicht jedoch an welcher. Dies muss vom Bedienpersonal ermittelt werden.

Aufgabe der vorliegenden Erfindung ist es somit, ein Verfahren vorzuschlagen, mit dessen Hilfe eine einfache und kostengünstige Anzeige von Informationen bezüglich der jeweiligen Arbeitsstellen möglich ist, ohne den für das Bedienpersonal zugänglichen Informationsgehalt zu mindern.

Die Aufgabe wird gelöst durch ein Verfahren und eine Spinn- oder Spulmaschine mit den Merkmalen der unabhängigen Patentansprüche.

Bei dem vorgeschlagenen Verfahren zum Steuern einer Anzeige an einer Spinn- oder Spulmaschine mit einer Vielzahl gleichartiger Arbeitsstellen und mehreren Anzeigen ist jeweils eine Anzeige mehreren Arbeitsstellen zugeordnet.

Es wird vorgeschlagen, dass während eines Normalbetriebs der einer Anzeige zugeordneten Arbeitsstellen die Anzeige Informationen zu mehreren der der Anzeige zugeordneten Arbeitsstellen anzeigt, wobei die Informationen zu den einzelnen Arbeitsstellen jeweils auf einer Teilfläche der Anzeige angezeigt werden, und dass bei Bedarf der Flächenanteil der jeweiligen Teilflächen verändert wird. Normalbetrieb bedeutet in diesem Zusammenhang eine Fadenherstellung bzw. -spulung innerhalb regulärer Betriebsparameter ohne Störung und abseits einer Inbetriebnahme oder Stillsetzung der entsprechenden Arbeitsstelle.

Im Gegensatz zur Ausstattung jeder einzelnen Arbeitsstelle mit einer Anzeige kann mit dem vorgeschlagenen Verfahren mindestens jede zweite Anzeige eingespart werden. Zusätzlich können durch die Unterteilung der Anzeige in Teilflächen Informationen zu allen der Anzeige zugeordneten Arbeitsstellen gleichzeitig angezeigt werden. Ein möglicher Verlust an Informationsgehalt durch die reduzierte Anzeigefläche gegenüber einer Anzeige, der nur eine Arbeitsstelle zugeordnet ist, wird dadurch ausgeglichen, dass bei Bedarf der Flächenanteil der jeweiligen Teilflächen verändert werden kann. Beispielsweise werden bei Normalbetrieb nur die wichtigsten Informationen zu jeder der entsprechenden Anzeige zugeordneten Arbeitsstellen angezeigt. Hingegen wird bei Verlassen des Normalbetriebs einer Arbeitsstelle der Flächenanteil der Teilfläche, die dieser Arbeitsstelle zugeordnet ist, vergrößert. Auf der vergrößerten Fläche werden schließlich Zusatzinformationen angezeigt. Auch könnten durch das Eingreifen von Bedienpersonal der Inhalt und/oder die Größe der Teilflächen verändert und damit zusätzliche Informationen zugänglich gemacht werden.

Vorzugsweise ist jeweils zwei benachbarten Arbeitsstellen eine gemeinsame Anzeige zugeordnet, mit deren Hilfe Information zu jeder der beiden Arbeitsstellen anzeigbar sind.

Von besonderem Vorteil ist es, wenn die Anzeige im Normalbetrieb den Zustand, insbesondere den Wartungsbedarf, der ihr zugeordneten Arbeitsstellen anzeigt. Für das Bedienpersonal einer Textilmaschine ist es hilfreich, auf einen Blick beurteilen zu können, in welchem Zustand sich jede Arbeitsstelle befindet. Ein solcher Zustand könnte beispielsweise ein bestimmter Abschnitt eines Herstellungsprozesses oder insbesondere das Auftreten eines Fehlers im Betrieb einer Arbeitsstelle sein. Auch könnten Informationen zu dem aktuell gesponnen oder umgespulten Garn oder den Fortschritt des ablaufenden Spinn- oder Spulprozesses dargestellt werden. Es wäre auch denkbar, dass die Anzeige bei Normalbetrieb aller zugeordneten Arbeitsstellen ausgeschaltet ist und nur bei Auftreten eines neuen Zustands an einer der zugeordneten Arbeitsstellen aktiviert wird.

Weiterhin ist es vorteilhaft, wenn die Informationen zu den einer Anzeige zugeordneten Arbeitsstellen und/oder die Zugehörigkeit der Teilflächen zu den Arbeitsstellen durch Symbole angezeigt werden. Bei der schnellen Bewertung des Zustands der Arbeitsstellen durch das Bedienpersonal sind Symbole, die auch aus großer Entfernung erkennbar sind, von großem Vorteil. Außerdem können Symbole auch auf kleiner Fläche komplexe Zusammenhänge darstellen. Beispielsweise könnte ein Ausrufezeichen das Auftreten eines Problems symbolisieren, wobei weitere Symbole die Art des Problems anzeigen könnten. Auch die Zugehörigkeit einer Teilfläche der Anzeige zu einer Arbeitsstelle kann durch Symbole leicht verständlich dargestellt werden. Beispielsweise könnten Pfeile, die in die Richtung derjenigen Arbeitsstelle zeigen, zu der Informationen auf der entsprechenden Teilfläche angezeigt werden, diese Zugehörigkeit unmissverständlich anzeigen.

Vorteilhafter Weise werden der Flächenanteil der Teilflächen einer Anzeige und/oder die Art der durch die Anzeige angezeigten Informationen bei Bedarf manuell oder mithilfe einer der Anzeige zugeordneten Anzeigesteuerung, insbesondere aufgrund definierter Zustände der Arbeitsstellen, verändert. Der hier beschriebene Bedarf kann beispielsweise eintreten, wenn Bedienpersonal Zugang zu Informationen benötigt, die nicht während eines Normalbetriebs der Arbeitsstellen angezeigt werden. In einem solchen Fall wäre es vorteilhaft, wenn durch manuelles Eingreifen des Bedienpersonals sowohl die Art der angezeigten Informationen als auch der Flächenanteil einer entsprechenden Teilfläche verändert werden, um eine übersichtliche Darstellung der Zusatzinformationen zu gewährleisten. Denkbar wäre das Aufrufen eines Wartungsverlaufs einer Arbeitsstelle auf diese Weise. Zusätzlich ist eine Anzeigesteuerung vorteilhaft, die automatisch, beispielsweise beim Auftreten von Fehlern an einer der Anzeige zugeordneten Arbeitsstelle, eine Veränderung der Darstellung auf einer Anzeige veranlasst. Hierdurch kann das Bedienpersonal effizient auf ein eventuell nötiges Eingreifen hingewiesen werden. Alternativ wäre es denkbar, die angezeigten Informationen und/oder die Flächenanteile der Teilflächen in bestimmten Zeitintervallen periodisch zu verändern.

Vorteilhaft ist es, wenn im Normalbetrieb die Teilflächen einer Anzeige, die jeweils einer Arbeitsstelle zugeordnet sind, gleich groß dargestellt werden. Dies gewährt dem Bedienpersonal eine gute Übersicht über Informationen zu jeder Arbeitsstelle.

Ebenso ist es vorteilhaft, wenn durch Eingaben an einem Eingabemittel, das einer Anzeige zugeordnet ist oder durch eine berührungssensitive Anzeige gebildet ist, die Art der in wenigstens einer Teilfläche der Anzeige angezeigten Informationen und/oder der Flächenanteil wenigstens einer Teilfläche an der Gesamtfläche der Anzeige verändert werden kann.. Dies ermöglicht dem Bedienpersonal den übersichtlichen Zugriff auf alle von den Arbeitsstellen bereitgestellten Informationen. Neben einer berührungssensitiven Anzeige kommen insbesondere ein oder mehrere Taster, bzw. eine Tastatur und/oder eine Maus als Eingabemittel in Frage.

Nach einer vorteilhaften Weiterbildung des Verfahrens wird durch Eingaben an einem einer Anzeige zugeordneten Eingabemittel, insbesondere einemberührungssensitiven Abschnitt der Anzeige, wenigstens eine der Anzeige zugeordneten Arbeitsstellen gesteuert. Dies ermöglicht dem Bedienpersonal das individuelle Eingreifen in den Arbeitsablauf jeder einzelnen Arbeitsstelle. Denkbar wären die Veränderung von Herstellungseigenschaften oder Anpassung von Arbeitsgeschwindigkeiten bis zur manuellen Stillsetzung einzelner Arbeitsstellen durch entsprechende Eingaben. Insbesondere eine ergänzende Steuerung durch Eingaben zusätzlich zu einer übergeordneten automatischen Steuerung wäre vorteilhaft.

Besonders vorteilhaft ist es, wenn durch eine Eingabe und/oder durch eine der Anzeige zugeordneten Anzeigesteuerung der Flächenanteil einer Teilfläche an der Gesamtanzeigefläche der Anzeige auf mindestens 70 % erhöht wird. Um die Informationen zu einer bestimmten Arbeitsstelle übersichtlich für das Bedienpersonal darzustellen, beispielsweise im Störfall, ist es vorteilhaft, den Flächenanteil der dieser Arbeitsstelle zugeordneten Teilfläche auf einen Großteil der Gesamtanzeigefläche zu vergrößern. Werte von 70 % und höher stellen ein vorteilhaftes Maß dar. Beispielsweise könnte einer Arbeitsstelle temporär auch die gesamte Anzeigefläche zugeordnet werden.

Weiterhin ist es für eine Spinn- oder Spulmaschine mit einer Vielzahl gleichartiger Arbeitsstellen und mehreren Anzeigen, wobei jeweils eine Anzeige mehreren Arbeitsstellen zugeordnet ist, von großem Vorteil, wenn der Anzeige eine Anzeigesteuerung zugeordnet ist, die ausgebildet ist, die Anzeige entsprechend der vorangegangenen oder nachfolgenden Beschreibung zu steuern. Dies erlaubt es, die Gesamtzahl der benötigten Anzeigen gegenüber einer Anordnung von einer Anzeige je Arbeitsstelle ohne Informationsverlust für das Bedienpersonal zu reduzieren. Beispielsweise könnten bei einer Zuordnung von jeweils zwei Arbeitsstellen zu jeweils einer Anzeige, die nach dem Verfahren der vorangegangenen Beschreibung gesteuert wird, die Gesamtzahl der Anzeigen um die Hälfte reduziert werden. Weitere Einsparungen könnten sich beispielsweise aus einer Zuordnung von je drei oder vier Arbeitsstellen zu jeweils einer Anzeige ergeben.

Zusätzlich ist es für die Spinn- oder Spulmaschine vorteilhaft, wenn die Anzeigesteuerung ausgebildet ist, die Anzeige derart zu steuern, dass die Anzeige im Normalbetrieb der ihr zugeordneten Arbeitsstellen den Zustand, insbesondere den Wartungsbedarf der Arbeitsstellen, anzeigt. Dies erlaubt dem Bedienpersonal in kurzer Zeit eine Einschätzung des Zustandes der jeweiligen Arbeitsstellen und ermöglicht eine vorteilhafte Planung von Arbeitsabläufen.

Ein großer Vorteil für die Spinn- oder Spulmaschine ist es, wenn die Anzeigesteuerung ausgebildet ist, die Anzeige derart zu steuern, dass die Informationen zu den einer Anzeige zugeordneten Arbeitsstellen und/oder die Zugehörigkeit der Teilflächen der Anzeige zu den jeweiligen Arbeitsstellen ganz oder teilweise durch Symbole dargestellt werden. Symbole können eine größere Flächendichte an Informationen gegenüber Zahlen und Buchstaben vermitteln und eignen sich deshalb besonders, um Anzeigefläche bei gleichem Informationsgehalt einzusparen.

Von besonderem Vorteil für die Spinn- oder Spulmaschine ist es, wenn die Anzeigesteuerung ausgebildet ist, die Anzeige derart zu steuern, dass der Flächenanteil der jeweiligen Teilflächen der Anzeige, die jeweils einer Anzeige zugeordnet sind, verändert werden. Die Veränderung des Flächenanteils der einzelnen Teilflächen im Bedarfsfall erlaubt beispielsweise das übersichtliche Abrufen von Zusatzinformationen oder das Alarmieren von Personal im Störfall. Vorzugsweise kann zusätzlich oder alternativ auch die Art der durch die Anzeige angezeigten Informationen (z. B. Zustand, Effizienz, Wartungsverlauf) manuell oder durch die Anzeigesteuerung verändert werden. Insbesondere kann es vorteilhaft sein, die Änderung aufgrund definierter Zustände (z. B. Störung, nächster Arbeitsschritt, Partieende) der Arbeitsstelle vorzunehmen.

Für die Spinn- oder Spulmaschine ist es vorteilhaft, wenn die Anzeigesteuerung ausgebildet ist, die Anzeige derart zu steuern, dass die Flächenanteile der den Arbeitsstellen zugeordneten Teilflächen bei einem Normalbetrieb dieser Arbeitsstellen gleich groß dargestellt werden. Dies erleichtert die Übersicht und das Erkennen von Arbeitsstellen außerhalb des Normalbetriebs. Alternativ wäre eine periodische Veränderung der Größe der Teilflächen oder eine Abschaltung der Anzeige während des Normalbetriebs der ihr zugeordneten Arbeitsstellen denkbar.

Ebenso ist es für die Spinn- oder Spulmaschine von Vorteil, wenn jeweils einer Anzeige ein Eingabemittel, insbesondere ein berührungssensitiver Abschnitt der Anzeige, zugeordnet ist, durch das die Art der durch die Anzeige in wenigstens einer Teilfläche angezeigten Informationen und/oder der Flächenanteil wenigstens einer Teilfläche an der Gesamtfläche der Anzeige verändert werden. Durch ein derartiges Eingabemittel, insbesondere in unmittelbarer Nähe der Anzeige, wird es dem Bedienpersonal möglich, schnell und übersichtlich beispielsweise Zusatzinformationen abzurufen. Neben einem berührungssensitiven Abschnitt der Anzeige oder beispielsweise einem separaten Berührungsbildschirm wären ein oder mehrere Taster bzw. eine Tastatur und/oder Maus als Eingabemittel denkbar.

Zusätzlich ist es für die Spinn- oder Spulmaschine vorteilhaft, wenn jeweils einer Anzeige ein Eingabemittel, insbesondere ein Berührungsbildschirm, zugeordnet ist, durch das wenigstens eine der Anzeige zugeordneten Arbeitsstellen gesteuert wird. Die Möglichkeit einer Steuerung am Ort der Arbeitsstellen erleichtert die Wartung und die kurzfristige Anpassung von Betriebsparametern durch das Bedienpersonal. Dabei kann die Anzeige dem Bedienpersonal sofort die Auswirkungen der Eingriffe vermitteln. Falls ein Eingabemittel zur Manipulation der Anzeige vorhanden ist, wäre es vorteilhaft, dies ebenfalls zur Steuerung der Arbeitsstellen heranzuziehen. Vorzugsweise ergänzt die Steuerung durch das Eingabemittel eine übergeordnete automatische Steuerung.

Vorteilhaft für die Spinn- oder Spulmaschine ist es, wenn die Anzeigesteuerung ausgebildet ist, die Anzeige derart zu steuern, dass durch Eingabe und/oder automatisch der Flächenanteil jeweils einer Teilfläche an der Gesamtanzeigefläche der Anzeige auf mindestens 70 % erhöht wird. Im Falle einer Notwendigkeit der Darstellung zusätzlicher Informationen über eine Arbeitsstelle ist es von Vorteil, wenn dem dieser Arbeitsstelle zugeordneten Flächenanteil ein Großteil der Anzeigefläche zugesprochen wird. Dies dient vor allem der Übersichtlichkeit und der Zeiteffizienz des Bedienpersonals. Vorzugsweise wird einer Arbeitsstelle bei Bedarf die gesamte Anzeigefläche bzw. der gesamte Anteil der Anzeigefläche, der arbeitsstellenindividuelle Informationen anzeigt, zugesprochen. Zusätzlich kann ein Bereich vorgesehen sein, der die Maschine als Ganzes oder einzelne Abschnitte derselben betrifft.

Von Vorteil für die Spinn- oder Spulmaschine ist es außerdem, wenn die Anzeigesteuerung und/oder das Eingabemittel und/oder die Anzeige eine Einheit bilden. Die Einheit aus Eingabemittel und Anzeige wäre beispielsweise bei einem Berührungsbildschirm gegeben. Eine Unterbringung der Anzeigesteuerung beispielsweise im Gehäuse der Anzeige wäre aufgrund der Platzersparnis vorteilhaft.

Vorzugsweise sind die Anzeigen fest mit der Spinn- oder Spulmaschine verbunden. Insbesondere eine Befestigung in einer Höhe von 1 m bis 1,5 m über dem Boden wäre für die Bedienbarkeit durch das Personal von Vorteil. Weiterhin können die Anzeigen beispielsweise als Flüssigkristallanzeige (LCD) ausgeführt sein. Für eine zusätzliche Informationstiefe wäre das Anzeigen verschiedener Farben durch die Anzeigen vorteilhaft. Die Anzeigen könnten insbesondere eine rechteckige Form und beispielsweise Kantenlängen von 4 cm bis 20 cm besitzen. Vorzugsweise sind die Anzeigen und/oder die Anzeigensteuerungen mit der Zentralsteuerung der Spinn- oder Spulmaschine elektronisch verbunden.

Weitere Vorteile der Erfindung sind in den nachfolgenden Ausführungsbeispielen beschrieben. Es zeigt:
- **Figur 1**: einen Ausschnitt aus der Frontansicht einer Spinnmaschine mit einer Anzeige je zwei Arbeitsstellen,
- **Figur 2**: eine vergrößerte Ansicht einer Anzeige im Normalbetrieb,
- **Figur 3**: eine vergrößerte Ansicht einer Anzeige beim Abrufen von Fehlerinformationen,
- **Figur 4**: eine vergrößerte Ansicht einer Anzeige beim Abrufen von Statusinformationen, sowie
- **Figur 5**: eine vergrößerte Ansicht einer Anzeige beim Abrufen von Wartungsinformationen.

Bei der nachfolgenden Beschreibung der Figuren werden für in den verschiedenen Figuren jeweils identische und/oder zumindest vergleichbare Merkmale gleiche Bezugszeichen verwendet. Die einzelnen Merkmale, deren Ausgestaltung und/oder Wirkweise werden meist nur bei ihrer ersten Erwähnung ausführlich erläutert. Werden einzelne Merkmale nicht nochmals detailliert erläutert, so entspricht deren Ausgestaltung und/oder Wirkweise der Ausgestaltung und Wirkweise der bereits beschriebenen gleichwirkenden oder gleichnamigen Merkmale.

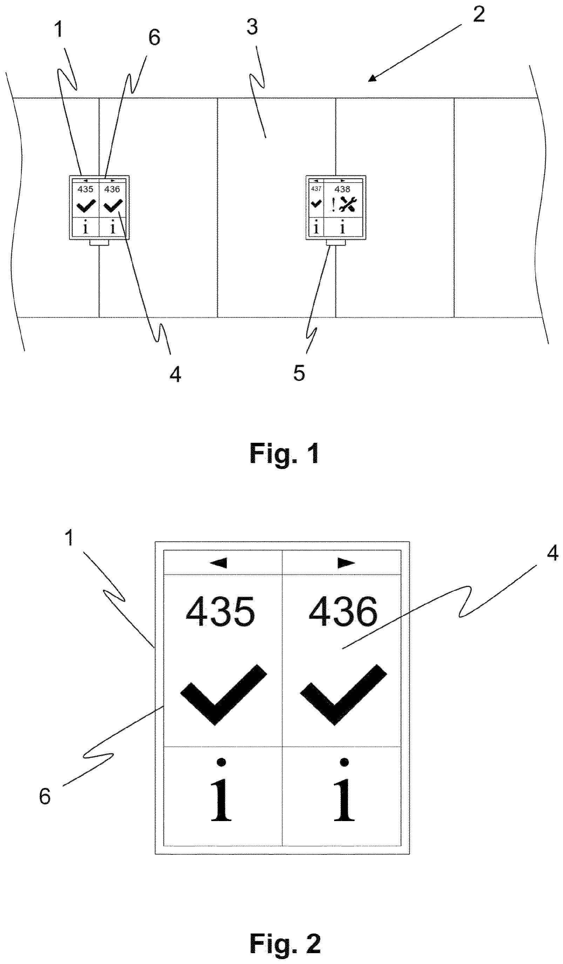

Wie in Figur 1 dargestellt, ist jeweils eine Anzeige 1 an einer Spinn- oder Spulmaschine 2 zwei Arbeitsstellen 3 zugeordnet. Die Steuerung der Anzeigen 1 wird von jeweils einer Anzeigesteuerung 5 gewährleistet. Durch die Unterteilung der Anzeigeflächen in mehrere Teilflächen 4 ist es möglich, Informationen zu jeder Arbeitsstelle 3 darzustellen und gleichzeitig die Gesamtzahl der Anzeigen 1 gegenüber einer Zuordnung von einer Anzeige 1 je Arbeitsstelle 3 zu reduzieren.

Durch die Darstellung von Symbolen (zusätzlich oder alternativ zu Zahlen und Buchstaben) durch die Anzeigen 1 wird es dem Bedienpersonal der Spinn- oder Spulmaschine 2 erleichtert, auch auf Distanz den Zustand der Arbeitsstellen 3 in kurzer Zeit bewerten zu können. Im Falle einer Fehlfunktion einer Arbeitsstelle 3 kann die Anzeigesteuerung 5 die Vergrößerung der entsprechenden Teilfläche 4 und das Anzeigen einer Fehlermeldung veranlassen, die dem Bedienpersonal signalisiert, ob ein Eingreifen notwendig ist.

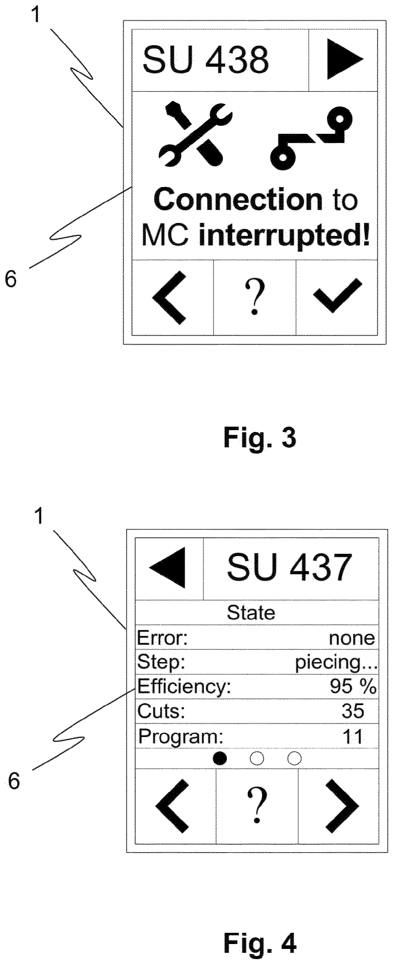

Zusätzlich wäre es denkbar, die Fehlermeldung blinkend darzustellen oder die entsprechende Teilfläche 4 farbig zu hinterlegen, falls beispielsweise ein sehr zeitnahes Eingreifen des Personals notwendig ist. Durch die Ausstattung der Anzeige 1 mit einem berührungssensitiven Abschnitt 6 , der insbesondere die ganze Oberfläche der Anzeige 1 umfassen kann, ist es dem Personal ohne ein zusätzliches Eingabemittel möglich, durch Berührung entsprechender Bereiche der Anzeige 1 Zusatzinformation abzurufen, wie beispielsweise eine ausführliche Fehlerbeschreibung (siehe Figur 3).

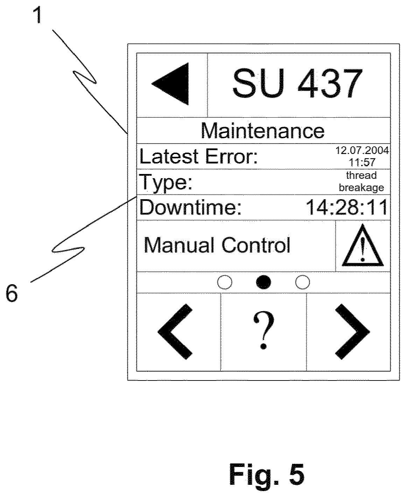

Figur 2 zeigt die vergrößerte Ansicht der Anzeige 1 im Normalbetrieb der ihr zugeordneten Arbeitsstellen 3. Vorzugsweise zeigen entsprechende Symbole für beide Arbeitsstellen 3 leicht verständlich den Normalbetrieb an. Die Teilflächen 4 sind in diesem Fall beispielsweise gleich groß, so dass die Informationen über beide Arbeitsstellen 3 übersichtlich dargestellt werden können. Die Zugehörigkeit der Teilflächen 4 zu den jeweiligen Arbeitsstellen 3 wird exemplarisch sowohl durch eine Nummerierung als auch symbolhaft durch Pfeile im oberen Bereich der Anzeige 1 dargestellt. Durch das Berühren eines berührungssensitiven Abschnitts 6 beispielsweise im unteren Bereich der Anzeige 1 durch das Personal können zusätzliche Informationen über die jeweilige Arbeitsstelle 3 angezeigt werden (siehe Figuren 4 und 5).

Figur 3 zeigt erneut die vergrößerte Ansicht der Anzeige 1, wobei hier exemplarisch die Auswirkungen der Berührung der in Figur 1 dargestellten Fehlermeldung durch das Personal dargestellt werden. Vorzugsweise ist die gesamte Anzeigefläche nun nur noch der Arbeitsstelle 3 mit der Fehlfunktion zugeordnet. Die Zuordnung ist beispielsweise deutlich durch die Bezeichnung der Arbeitsstelle 3 und einen vergrößert dargestellten Pfeil im oberen Bereich der Anzeige 1 zu erkennen. Sowohl eine mögliche Beschreibung in Worten als auch eine eventuell vorhandene symbolhafte Darstellung präzisieren die an der Arbeitsstelle 3 auftretende Fehlfunktion.

Durch die Berührung entsprechender Flächen auf dem berührungssensitiven Abschnitt 6 ist es dem Personal beispielsweise möglich, zusätzliche, die Fehlfunktion betreffende, Informationen abzurufen, oder die Anzeige 1 in den Ausgangszustand zurückzuversetzen. Alternativ zu der hier dargestellten Vergrößerung der entsprechenden Teilfläche 4 auf die Gesamtfläche der Anzeige wäre es ebenfalls möglich, auch bei der Darstellung der detaillierten Fehlerbeschreibung den Zustand der zweiten der Anzeige 1 zugeordneten Arbeitsstelle 3 in einer kleinen Teilfläche 4 der Anzeige 1 weiterhin anzuzeigen.

Figur 4 zeigt ein Beispiel für Zusatzinformationen, die durch das Bedienpersonal beim Berühren der entsprechenden in den Figuren 1 und 2 dargestellten Felder des berührungssensitiven Abschnitts 6 aufgerufen werden. Die entsprechende Teilfläche 4 wird beispielsweise auf die Gesamtfläche der Anzeige 1 vergrößert, wobei die Zuordnung vorzugsweise im oberen Bereich der Anzeige 1 exemplarisch durch die Bezeichnung der Arbeitsstelle 3 und symbolhaft durch einen Pfeil erkennbar ist. Eine Übersicht zeigt allgemeine Informationen zum Status der Arbeitsstelle 3 wie beispielsweise den Arbeitsschritt, in dem sie sich befindet, oder die Effizienz, mit der sie arbeitet. Hier zeigt sich deutlich, dass die variable Größe der Teilflächen 4 einen Informations- und Übersichtsverlust bei gleichzeitiger Einsparung bei der Anzahl an Anzeigen 1 verhindert, da die Anzeige 1 sich beispielsweise temporär so verhält, als wäre sie nur einer einzelnen Arbeitsstelle 3 zugeordnet.

Durch das Berühren entsprechender Felder des berührungssensitiven Abschnitts 6 der Anzeige 1 kann das Personal beispielsweise detailliertere Informationen zum Status der Arbeitsstelle 3 aufrufen oder in andere Kategorien wechseln (siehe Figur 5).

Ein Beispiel für eine weitere Kategorie an Zusatzinformationen zeigt Figur 5. Hier sind exemplarische Wartungsinformationen über die Arbeitsstelle 3 dargestellt. Diese beinhalten beispielsweise den Zeitpunkt der letzten Fehlfunktion oder die akkumulierte Ausfallzeit der Arbeitsstelle 3. Durch die Berührung eines entsprechenden Feldes des berührungssensitiven Abschnitts 6 kann das Bedienpersonal zum Beispiel ein Menü zur manuellen Steuerung der Arbeitsstelle 3 aufrufen. Hierdurch könnte die Arbeitsstelle 3 beispielsweise vor Ort stillgesetzt werden. Durch die Berührung anderer Felder können wie vorher detailliertere Informationen aufgerufen oder in andere Kategorien gewechselt werden.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Anzeige
- 2: Spinn- oder Spulmaschine
- 3: Arbeitsstelle
- 4: Teilfläche
- 5: Anzeigesteuerung
- 6: Berührungssensitiver Abschnitt

## Patentansprüche

1. Verfahren zum Steuern einer Anzeige (1) an einer Spinn- oder Spulmaschine (2) mit einer Vielzahl gleichartiger Arbeitsstellen (3) und mehreren Anzeigen (1), wobei jeweils eine Anzeige (1) mehreren Arbeitsstellen (3) zugeordnet ist, **dadurch gekennzeichnet, dass** während eines Normalbetriebs der der jeweiligen Anzeige (1) zugeordneten Arbeitsstellen (3) die Anzeige (1) Informationen zu mehreren der der Anzeige zugeordneten Arbeitsstellen (3) anzeigt, wobei die Informationen zu den einzelnen Arbeitsstellen (3) jeweils auf einer Teilfläche (4) der Anzeige (1) angezeigt werden, und dass bei Bedarf der Flächenanteil der jeweiligen Teilflächen (4) an der Gesamtanzeigefläche der Anzeige (1) verändert wird.

2. Verfahren nach dem vorherigen Anspruch, **dadurch gekennzeichnet, dass** die Anzeige (1) im Normalbetrieb den Zustand, insbesondere den Wartungsbedarf, der der Anzeige (1) zugeordneten Arbeitsstellen (3) anzeigt.

3. Verfahren nach einem der vorherigen Ansprüche, **dadurch gekennzeichnet, dass** die Informationen zu den einzelnen einer Anzeige (1) zugeordneten Arbeitsstellen (3) und/oder die Zugehörigkeit der Teilflächen (4) der Anzeige (1) zu den jeweiligen Arbeitsstellen (3) durch Symbole dargestellt werden.

4. Verfahren nach einem der vorherigen Ansprüche, **dadurch gekennzeichnet, dass** der Flächenanteil der jeweiligen Teilfläche (4) der Anzeige (1), die einer Arbeitsstelle (3) zugeordnet ist, und/oder die Art der durch die Anzeige (1) angezeigten Informationen bei Bedarf manuell oder mithilfe einer der Anzeige zugeordneten Anzeigesteuerung (5), insbesondere aufgrund definierter Zustände der Arbeitsstelle, verändert werden.

5. Verfahren nach einem der vorherigen Ansprüche, **dadurch gekennzeichnet, dass** die Flächenanteile der Teilflächen (4) der Anzeige (1) im Normalbetrieb gleich groß sind.

6. Verfahren nach einem der vorherigen Ansprüche, **dadurch gekennzeichnet, dass** durch Eingaben an einem Eingabemittel, das einer Anzeige (1) zugeordnet ist, insbesondere eines berührungssensitiven Abschnitts (6) der Anzeige (1), die Art der durch die Anzeige (1) in wenigstens einer Teilfläche (4) angezeigten Informationen und/oder der Flächenanteil wenigstens einer Teilfläche an der Gesamtfläche der Anzeige verändert werden.

7. Verfahren nach einem der vorherigen Ansprüche, **dadurch gekennzeichnet, dass** durch Eingaben an einem Eingabemittel, das einer Anzeige (1) zugeordnet ist, insbesondere eines berührungssensitiven Abschnitts (6) der Anzeige (1), wenigstens eine der der Anzeige (1) zugeordneten Arbeitsstellen (3) gesteuert wird.

8. Verfahren nach einem der vorherigen Ansprüche, **dadurch gekennzeichnet, dass** durch eine Eingabe und/oder durch eine der Anzeige (1) zugeordnete Anzeigesteuerung (5) der Flächenanteil jeweils einer Teilfläche (4) an der Gesamtanzeigefläche der Anzeige (1) zeitweise auf mindestens 70 % erhöht wird.

9. Spinn- oder Spulmaschine (2) mit einer Vielzahl gleichartiger Arbeitsstellen (3) und mehreren Anzeigen (1), wobei jeweils eine Anzeige (1) mehreren Arbeitsstellen (3) zugeordnet ist, **dadurch gekennzeichnet, dass** der Anzeige (1) eine Anzeigesteuerung (5) zugeordnet ist, die ausgebildet ist, die Anzeige (1) derart zu steuern, dass die durch die Anzeigesteuerung (5) gesteuerte Anzeige (1) während eines Normalbetriebs der der jeweiligen Anzeige (1) zugeordneten Arbeitsstellen (3) Informationen über diese Arbeitsstellen (3) anzeigt, wobei die die jeweiligen Arbeitsstellen (3) betreffenden Informationen jeweils eine Teilfläche (5) der Anzeige (1) einnehmen, und dass bei Bedarf der Flächenanteil der jeweiligen Teilflächen (4) an der Gesamtanzeigefläche der Anzeige (1) verändert wird.

10. Spinn- oder Spulmaschine (2) nach dem vorhergehenden Anspruch, **dadurch gekennzeichnet, dass** die Anzeigesteuerung (5) ausgebildet ist, die Anzeige (1) derart zu steuern, dass die Anzeige (1) im Normalbetrieb den Zustand, insbesondere den Wartungsbedarf, der der Anzeige (1) zugeordneten Arbeitsstellen (3) anzeigt.

11. Spinn- oder Spulmaschine (2) nach einem der vorhergehenden Ansprüche, **dadurch gekennzeichnet, dass** die Anzeigesteuerung (5) ausgebildet ist, die Anzeige (1) derart zu steuern, dass die Informationen zu den einzelnen einer Anzeige (1) zugeordneten Arbeitsstellen (3) und/oder die Zugehörigkeit der jeweiligen Teilfläche (4) der Anzeige (1) zu einer der Arbeitsstellen (3) durch Symbole dargestellt werden.

12. Spinn- oder Spulmaschine (2) nach einem der vorhergehenden Ansprüche, **dadurch gekennzeichnet, dass** die Anzeigesteuerung (5) ausgebildet ist, die Anzeige (1) derart zu steuern, dass der Flächenanteil der jeweiligen Teilfläche (4) der Anzeige (1), die einer Arbeitsstelle (3) zugeordnet ist, und/oder die Art der durch die Anzeige (1) angezeigten Informationen bei Bedarf manuell oder durch die Anzeigesteuerung (5), insbesondere aufgrund definierter Zustände der Arbeitsstelle, verändert werden.

13. Spinn- oder Spulmaschine (2) nach einem der vorhergehenden Ansprüche, **dadurch gekennzeichnet, dass** die Anzeigesteuerung (5) ausgebildet ist, die Anzeige (1) derart zu steuern, dass die Flächenanteile der Teilflächen (4) der Anzeige (1) im Normalbetrieb gleich groß sind.

14. Spinn- oder Spulmaschine (2) nach einem der vorhergehenden Ansprüche, **dadurch gekennzeichnet, dass** der Anzeige (1) ein Eingabemittel, insbesondere ein berührungssensitiver Abschnitt (6) der Anzeige (1) zugeordnet ist, durch das die Art der durch die Anzeige (1) in wenigstens einer Teilfläche (4) angezeigten Informationen und/oder der Flächenanteil wenigstens einer Teilfläche an der Gesamtfläche der Anzeige veränderbar ist und/oder durch das wenigstens eine der der Anzeige (1) zugeordneten Arbeitsstellen (3) steuerbar ist.

15. Spinn- oder Spulmaschine (2) nach einem der vorhergehenden Ansprüche, **dadurch gekennzeichnet, dass** die Anzeigesteuerung (5) ausgebildet ist, die Anzeige (1) derart zu steuern, dass durch Eingabe und/oder automatisch durch die Anzeigesteuerung (5) der Flächenanteil jeweils einer Teilfläche (4) an der Gesamtanzeigefläche der Anzeige (1) zweitweise auf mindestens 70 % erhöht wird, und/oder dass die Anzeigesteuerung (5) und/oder das Eingabemittel und/oder die Anzeige (1) eine Einheit bilden.
